Europäisches Patentamt

European Patent Office

Office européen des brevets

(19)

(11) Numéro de publication: **0 141 115 B1**

## (12) FASCICULE DE BREVET EUROPEEN

(45) Date de publication de fascicule du brevet:
**10.04.91**

(51) Int. Cl.⁵: **G01F 23/00**, F27D 21/00,
G01B 5/20, C21B 7/24

(21) Numéro de dépôt: **84110064.7**

(22) Date de dépôt: **23.08.84**

(54) Dispositif pour la détermination du profil de la surface de chargement d'un four à cuve.

(30) Priorité: **07.09.83 LU 84992**

(43) Date de publication de la demande:
**15.05.85 Bulletin 85/20**

(45) Mention de la délivrance du brevet:
**10.04.91 Bulletin 91/15**

(84) Etats contractants désignés:
**AT BE DE FR GB IT NL**

(56) Documents cités:
EP-A- 0 056 943    DE-A- 3 123 944
GB-A- 957 545      LU-A- 73 050
US-A- 2 316 955    US-A- 2 758 474
US-A- 3 500 546    US-A- 3 838 518
US-A- 4 044 612    US-A- 4 098 122

(73) Titulaire: **PAUL WURTH S.A.**
**32 rue d'Alsace**
**L-1122 Luxembourg(LU)**

(72) Inventeur: **Mailliet, Pierre**
**1 allée Drosbach**
**Howald(LU)**
Inventeur: **Lonardi, Emile**
**30 rue de Schouweiler**
**Bascharage(LU)**
Inventeur: **Radoux, Henri**
**10 rue de Schmitshausen**
**Bereldange(LU)**
Inventeur: **Kremer, Victor**
**95 rue de l'Egalité**
**Luxembourg(LU)**

(74) Mandataire: **Freylinger, Ernest T. et al**
**Office de Brevets FREYLINGER & ASSOCIES**
**B.P. 1 321, route d'Arlon**
**L-8001 Strassen(LU)**

## Description

La présente invention concerne un dispositif pour la détermination du profil du chargement d'un four à cuve au moyen d'une série de sondes de niveau comprenant chacune un poids suspendu verticalement au-dessus du chargement à l'une des extrémités d'un câble sortant d'un bras porteur l'extrémité opposée de chacun de ces câbles étant reliées, chacune, à l'extérieur du four, dans une unité de commande à l'un d'un nombre correspondant de tambours enrouleurs, chacun de ces tambours étant commandé par un dispositif d'entraînement pour faire monter ou descendre la sonde reliée à ce tambour, ainsi qu'un dispositif de contrôle pour mesurer le déroulement du câble du tambour et la descente de la sonde sur la surface de chargement.

Le profil de la charge d'un four à cuve, notamment d'un haut fourneau, c'est-à-dire le talutage, est déterminé essentiellement par deux facteurs. L'un de ces facteurs est la répartition de la matière de chargement lors de son introduction dans le four et le second facteur est la descente de la matière à l'intérieur du four.

Si une maîtrise de la descente de la matière n'est guère possible, par contre, la mise au point des gueulards sans cloche a permis non seulement de réaliser à volonté le profil de répartition de la matière à enfourner, mais également une correction ou redressement éventuel du profil du chargement. Le dispositif de chargement à gueulard sans cloche offre par conséquent la possibilité de maîtriser l'évolution du profil de la surface de chargement durant l'opération du haut fourneau, à condition que l'on puisse déterminer ce profil. Autrement dit, un dispositif de détermination du profil de la surface de chargement est un complément idéal et souhaité pour les gueulards sans cloche.

Malheureusement, jusqu'à présent, on devait, le plus souvent, se contenter d'une estimation très approximative de ce profil en se basant sur des mesures de niveau réalisées en quelques points différents au moyen de sondes verticales mécaniques montées dans la tête du four.

C'est la raison pour laquelle on a essayé récemment de mettre au point des profilomètres à rayonnement pour obtenir une représentation totale du profil sur toute la surface du chargement Toutefois, ces profilomètres à rayonnement n'ont pas encore été développés jusqu'au stade de l'exploitation industrielle, car jusqu'à présent, ils restent les victimes des conditions sévères qui règnent dans la tête du four, ainsi que de leur prix de revient élevé.

La tendance actuelle est le retour vers les sondes verticales de niveau dans le but de perfectionner celles-ci pour obtenir une meilleure représentation ou approximation du profil. C'est ainsi que la demande de brevet DE-A1-31 23 944 propose un dispositif du genre décrit dans le préambule de la revendication 1, qui est un dispositif à sondes multiples pour sonder simultanément plusieurs points situés sur une ligne radiale de la surface du lit de fusion.

Toutefois, le dispositif connu qui a été conçu dans le but de fonctionner avec un seul dispositif d'entraînement commun pour toutes les sondes, a été singulièrement compliqué dans sa réalisation. En effet, les nombreuses poulies de guidage et de renvoi des câbles compliquent l'entretien et risquent de provoquer une usure prématurée de ces câbles. En outre, la remontée des sondes à partir de la surface du chargement implique d'abord la remontée des poulies libres avant le dégagement des sondes de la surface, ce qui non seulement prolonge la durée d'un sondage mais en plus, oblige les sondes à reposer sur la matière plus longtemps que nécessaire. Il faut également signaler que les nombreuses poulies nécessaires pour chaque sonde rendent le dispositif très encombrant.

Le but de la présente invention est de prévoir un nouveau dispositif à sondes multiples pour le sondage simultané d'une série de points situés sur une ou plusieurs lignes radiales de la surface de chargement, qui ne présente pas les inconvénients du dispositif connu, et qui est d'une construction simple, compacte et facile à entretenir.

Pour atteindre, cet objectif, le dispositif selon invention présente les caractéristique de la revendication 1.

L'utilisation d'une série d'entretoises et un circuit de refroidissement dans un Ail dispositif est connue de US-A-4044 612 et EP-A-0056 943. L'utilisation d'un torsiomètre et des moyens pour amortir les chocs est connue de US-A-2316 955.

La gaine comporte au niveau de chaque ouverture une cuvette de réception du poids de la sonde. Cette cuvette est montée avantageusement par l'intermédiaire de moyens élastiques sur la gaine pour amortir la réception des poids.

Les tubes de guidage sont torsadés à l'intérieur de la gaine, d'une part, de façon à se présenter à l'entrée de l'unité de commande sous forme de deux groupes de tubes disposés symétriquement de part et d'autre d'un plan médian de la gaine et, d'autre part, de façon à évoluer à l'approche des ouvertures et cuvettes de réception, le long du côté de la gaine qui est diamétralement opposé à celui des ouvertures, avant de pénétrer perpendiculairement dans celles-ci en formant un coude de 90°. Selon un mode de réalisation avantageux, les tubes sont garnis intérieurement d'un fil hélicoïdal enroulé, à l'intérieur duquel passe le câble. Ce fil enroulé empêche l'usure du tube de guidage et réduit celle du câble, et en plus, elle est remplaçable lorsqu'elle est usée.

Chaque tube de guidage est avantageusement en communication avec un réservoir contenant un gaz de rinçage sous pression, cette pression étant supérieure à la pression dans l'unité de commande (28) qui, à son tour, est supérieure à la pression dans le four.

Chaque tambour est de préférence associé à un système de détection de mou de câble pour éviter un enchevêtrement des câbles en cas de panne.

D'autres particularités et caractéristiques ressortiront de la description détaillée d'un mode de réalisation présenté ci-dessous, à titre d'illustration, en référence aux dessins annexés, dans lesquels :

Les figures 1 et 2 représentent schématiquement respectivement une vue latérale et une vue en plan de l'ensemble du dispositif de sondage;

La figure 3 montre, en coupe verticale, la disposition des tubes à l'intérieur de la gaine;

La figure 4 montre une coupe transversale agrandie de la gaine au niveau d'une ouverture;

La figure 5 montre une coupe longitudinale agrandie d'une partie de la gaine au niveau d'une ouverture;

La figure 6 montre une coupe verticale à travers un tambour d'enroulement et son mécanisme d'entraînement;

La figure 7 montre une coupe transversale à travers le tambour d'enroulement suivant le plan de coupe VII-VII;

La figure 8 montre une coupe au niveau du plan VIII-VIII de la figure 6;

La figure 9 montre un arrangement de plusieurs dispositifs de sondage à l'intérieur d'un four à cuve;

La figure 10 montre, comme variante, un dispositif de sondage pivotable;

La figure 11 montre une vue, en coupe longitudinale, d'un système de rinçage d'un tube de guidage;

La figure 12 montre schématiquement un système de détection de mou de câble,

La figure 13 montre schématiquement le fonctionnement du dispositif de la figure 12,

La figure 14 montre schématiquement un autre mode de réalisation d'un système de détection de mou de câble,

La figure 15 montre schématiquement le fonctionnement du dispositif de la figure 14,

Les figures 16 et 17 montrent un mode de réalisation avantageux d'un torsiomètre associé au moteur de déroulement d'un câble, et

Les figures 18 à 20 illustrent schématiquement un procédé de remplacement des câbles.

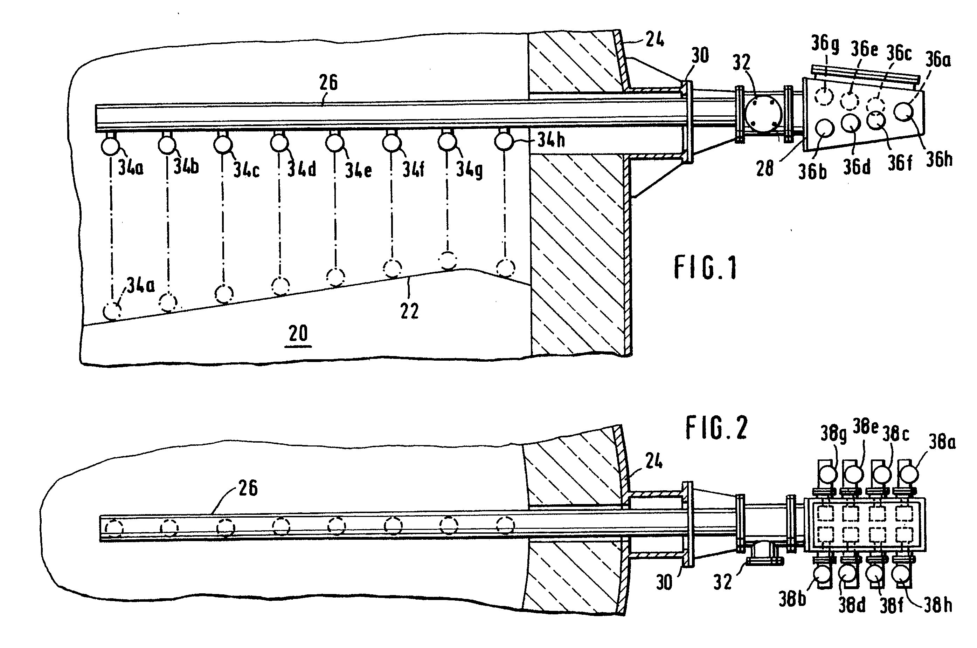

Les figures 1 et 2 montrent schématiquement un dispositif de sondage comportant huit sondes individuelles pour mesurer simultanément la hauteur de huit points du niveau de la matière de chargement 20 se trouvant dans un four à cuve dont la paroi est représentée par 24. Ces huits points de mesure permettent une évaluation suffisamment précise de la courbe 22 représentant le profil du chargement dans le four.

Le dispositif de sondage pénètre horizontalement et radialement à travers la paroi 24 jusque dans la région centrale du four et son support est assuré par un raccord à bride 30 sur le blindage de la paroi 24 du four. La partie se trouvant à l'intérieur du four est essentiellement constituée par un bras porteur 26 maintenu en porte-à-faux au-dessus du chargement et portant une série de sondes individuelles constituées par les poids 34a, 34b, 34c, 34d, 34e, 34f, 34g et 34h qui sont reliés à travers le bras 26, au moyen de câbles à une unité de commande extérieure 28. Entre l'unité de commande 28 et la bride de raccord 30 se trouve une ouverture 32 permettant l'inspection des câbles.

Ces câbles non représentés auxquels sont rattachés les poids 34a à 34h sont reliés, à l'intérieur de l'unité de commande 28 à des tambours d'enroulement représentés par les références 36a, 36b, 36c, 36d, 36e, 36f, 36g et 36h. Les mesures sont effectuées par déroulement des tambours 36 pour faire descendre les poids 34 de la position représentée en traits pleins sur le chargement dans la position représentée en traits interrompus. La longueur du câble déroulé fournit l'indication et le niveau du point de mesure concerné. Le déroulement et l'enroulement du câble au moyen des tambours 36 est effectué par des moteurs 38a, 38b, 38c, 38d, 38e, 38f, 38g et 38h associés respectivement à chacun des tambours 36a à 36h.

Il est bien entendu que le choix des huit sondes individuelles ne constitue qu'un exemple de réalisation. Suivant le diamètre du four et suivant la précision des mesures que l'on souhaite réaliser, on peut augmenter ou diminuer le nombre de ces sondes.

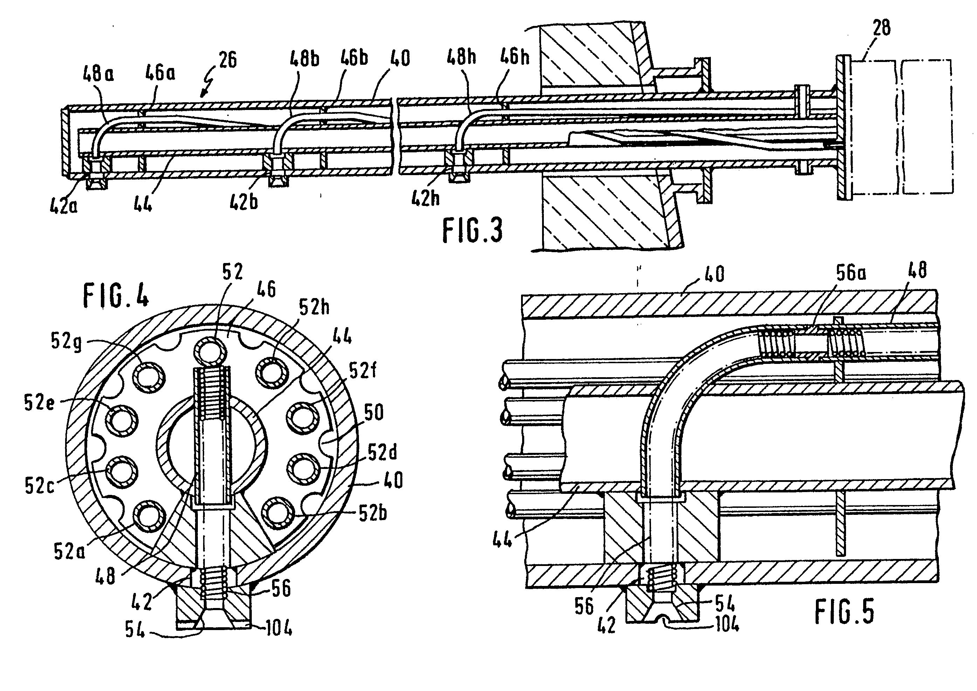

Les figures 3 à 5 montrent les détails de la structure du bras porteur 26. Celui-ci est constitué d'une gaine fermée 40, cylindrique dans l'exemple représenté, et pourvue sur le côté inférieur d'une série d'ouvertures 42a, 42b, ... 42h pour le passage des câbles auxquels sont attachés les poids 34. A l'intérieur de cette gaine 40, se trouve un tube coaxial 44 à travers lequel est admis un liquide de refroidissement, par exemple de l'eau, qui retourne par l'espace annulaire entre ce tube 44 et la gaine 40.

Une série de tubes de guidage des câbles 48a, 48b... 48h, relient respectivement les ouvertures 42a, 42b ... 42h à l'unité de commande 28 à l'extérieur du four en passant par l'espace creux annulaire entre la gaine 40 et le tube 44 qui est passé transversalement par chacun des tubes de guidage 48 en face des ouvertures 42. Les tubes 48 sont maintenus en place à l'intérieur de la gaine 40 au moyen d'une série d'entretoises annulaires 46a, 46b, ... 46h disposés à côté des ouvertures 42, entre le tube 44 et la gaine 40.

Les entretoises 46 comportent des découpes périphériques 50 (voir figure 4) permettant le passage du liquide de refroidissement. Les entretoises 46 possèdent, bien entendu, également des ouvertures 52 pour le passage des tubes 48 de guidage des câbles. Ces entretoises 46 peuvent toutes être identiques ou bien présenter seulement le nombre d'ouvertures 52 nécessaire, c'est-à-dire que l'entretoise 46a possède une ouverture 52a, l'entretoise 46b, deux ouvertures 52a et 52b, jusqu'à l'entretoise 52h qui possède huit ouverture 52a, 52b, ... 52h.

Les tubes 48 pénètrent perpendiculairement dans les ouvertures associées 42 grâce à un coude de 90°. Afin que le rayon de courbure de ce coude soit aussi grand que possible, ce coude traverse le tube central 44 de sorte que les tubes 48 passent tous à travers les entretoises 46 associées du côté opposé à celui des ouvertures 42. Etant donné que tous ces tubes 48 traversent les entretoises 46 sur le côté supérieur, ils doivent être torsadés dans l'espace annulaire entre le tube 44 et la gaine 40 pour permettre la sortie de tous les tubes 48. Cette torsion des tubes 48a, 48b, ... 48h est réalisée de telle manière que tous ces tubes se présentent à l'entrée de l'unité 28 sous forme de deux groupes de quatre tubes situés de part et d'autre d'un plan médian. Cette répartition est illustrée sur la figure 4 par la numérotation des ouvertures 52, c'est-à-dire que les tubes 48a, 48c, 48e, 48g sont amenés d'un côté en face respectivement des tubes 48b, 48d, 48f et 48h qui se trouvent du côté opposé à l'entrée de l'unité de commande 28.

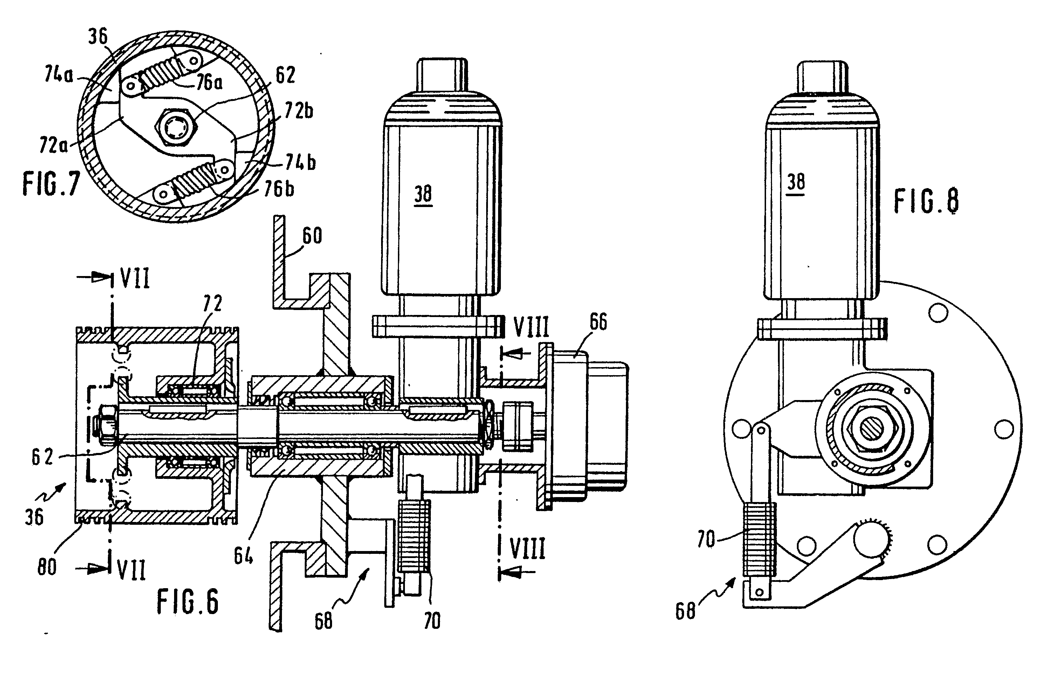

Comme le montrent les figures 4 et 5, la gaine 40 comporte au niveau de chaque ouverture 42 une cuvette 54 de réception des poids 34, la forme de cette cuvette 54 étant adaptée à la forme des poids 34 de manière que l'ouverture 52 soit bouchée en position relevée des poids pour empêcher la pénétration de poussières dans les tubes 48.

Pour réduire l'usure des câbles et empêcher celle des tubes 48 au niveau des coudes et torsions de ceux-ci, on introduit, comme le montre la figure 5, dans les tubes 48 un fil à ressort hélicoïdal 56 permettant le passage des câbles à travers les spires. Il a été constaté que ce fil enroulé 56 s'use beaucoup moins vite que le tube 48 et, en plus, même lorsqu' il est usé, il peut être remplacé. Pour faciliter le remplacement de ce fil 56 celui-ci est de préférence en deux pièces séparées par un manchon intermédiaire 56a.

On va maintenant décrire l'enroulement et le déroulement de chaque câble en référence aux figures 6 à 8. Le tambour 36 est monté sur un arbre 62 logé de façon rotative dans un palier 64 du boîtier 60 de l'unité de commande 28. A l'extérieur du boîtier 60 se trouve un moteur électrique 38 destiné à entraîner l'arbre 62, par exemple au moyen d'un engrenage à vis sans fin non représenté. A l'extérieur du boîtier 60 se trouve également un dispositif 66 pour la détection de la position et de la vitesse angulaire du tambour 36.

Pour assurer la rotation de l'arbre 62 sous l'action du moteur 38, c'est à dire pour éviter que ce soit le moteur 38 qui tourne autour de l'arbre 62, le moteur 38 doit être relié d'une manière ou d'une autre au boîtier 60. Cette liaison est effectuée au moyen d'un torsiomètre 68 relié, d'une part, au boîtier 60 et d'autre part, au moteur 38. Ce torsiomètre 68 est constitué d'un simple transducteur piézoélectrique 70 qui mesure la réaction de l'ensemble moteur réducteur 38 exercée par le couple transmis du poids de la sonde au tambour sur l'arbre 62. Ce transducteur commande automatiquement l'arrêt du moteur 38 lorsque le couple atteint un seuil supérieur prédéterminé correspondant à la remontée complète du poids 34 et lorsque le couple atteint un seuil inférieur prédéterminé correspondant au moment où le poids 34 touche la surface du chargement lors du déroulement du câble.

Le tambour 36 est monté sur son arbre 62 par l'intermédiaire d'un roulement 72. La liaison dynamique entre le tambour 36 et son arbre 62 est réalisée par l'intermédiaire d'une connexion élastique montrée à la figure 7. Cette connexion comporte deux ailettes 72a, 72b solidaires de l'arbre 62 qui coopèrent avec deux taquets 74a, 74b sur la face intérieure du tambour. Lorsque l'arbre 62 est entraîné dans le sens trigonométrique, les ailettes 72a, 72b entraînent directement le tambour 36 par leur action sur les taquets 74a, 74b. Les extrémités des ailettes 72a, 72b sont également reliées chacune au tambour 36 par des ressorts de compression 76a, 76b. Ces ressorts sont suffisamment puissants pour entraîner le tambour 36 lorsque les ailettes 72a, 72b tournent dans le sens des aiguilles d'une montre. Par contre, lorsque le tambour est bloqué par son câble lorsque le poids atteint l'arrêt supérieur les ressorts 76a, 76b, sous l'effet de leur compression, amortissent le choc de l'arrêt. En effet, cet arrêt de l'arbre 62, commandé par le torsiomètre 68, se produit forcément quelques instants après l'arrêt du tambour étant donné que ce n'est que l'augmentation du couple qui commande cet arrêt.

Pour amortir les forces vives dues aux inerties des masses en mouvement, l'invention prévoit des moyens pour réduire la vitesse de rotation à l'approche de la fin de course lors de la remontée des sondes. A cet effet, on prévoit deux alimentations différentes pour les moteurs 38. L'une de celle-ci est l'alimentation dite normale, qui est le branchement direct sur le réseau électrique, qui est une alimentation à courant alternatif à 50 Hertz. La seconde alimentation est réalisée à travers un diviseur de fréquence qui réduit la fréquence du courant alternatif du réseau de 50 Hertz à , par exemple, 10 Hertz. Il suffit d'un diviseur de fréquence unique pour tous les moteurs 38a à 38h. Si la fréquence d'alimentation électrique des moteurs est divisée par cinq, la vitesse de rotation des tambours 36 est également divisée par cinq tandis que le travail nécessaire à la compensation des forces d'inertie est réduit à $(\frac{1}{5})^2 = \frac{1}{25}$. La commutation des moteurs du réseau normal sur le diviseur de fréquence est réalisée automatiquement par un commutateur sous la commande du dispositif de détection 66 dans une position angulaire prédéterminée du tambour 36 correspondant à une distance prédéterminée des poids 34 avant l'arrêt supérieur.

Le dispositif 66 comporte avantageusement un générateur d'impulsions, ainsi qu'un détecteur et compteur d'impulsions. Un tel générateur, connu en soi, engendre par voie optique, ou mécanique, ou électrique, autant d'impulsions, par exemple cinquante impulsions à chaque rotation de l'arbre 62. Ces impulsions ainsi engendrées sont totalisées dans un compteur, de sorte qu'à chaque total correspond une longueur bien déterminée de câble déroulé, c'est-à-dire une position déterminée du poids 34. Ces renseignements fournis par le compteur d'impulsions sont dépouillés par des microprocesseurs dans une installation de traitement de données.

En dehors de la connexion élastique illustrée par la figure 7, il existe une autre possibilité d'amortir les chocs à l'arrêt. Celle-ci consiste simplement à prévoir un ressort au niveau de chacune des ouvertures 42 afin d'amortir le choc de chacun des poids 34 contre les cuvettes 54, ceci en combinaison avec la réduction de vitesse comme décrit ci-dessus.

Pour éviter les fausses mesures par un enroulement irrégulier des câbles sur les tambours 36, on prévoit des moyens pour que, lorsqu'un poids est complètement remonté, le câble couvre avec une couche de spires toute la largeur du tambour 36. A cet effet, on prévoit sur la surface de chaque tambour 36 une canelure hélicoïdale 80 pour recevoir le câble.

On va présenter ci-dessous un exemple de réalisation d'une sonde telle que décrite ci-dessus:
Puissance du moteur électrique : 250 watts
Fréquence du courant d'alimentation: 50 Hertz ou 10 Hertz
Circonférence du tambour : 50 centimètres (diamètre: approximativement 16 centimètres)
Vitesse de rotation du tambour: 1 tour/seconde
Capacité d'enroulement de câbles: 8 mètres
Vitesse du câble :
1) à 50 Hertz: 50 cm/seconde
2) à 10 Hertz: 10 cm/seconde

Si le générateur d'impulsions dans le dispositif 66 engendre cinquante impulsions à chaque tour de tambour, chaque impulsion représente une longueur de câble déroulé ou enroulé d'un centimètre. Autrement dit la précision de mesure de la sonde est de l'ordre du centimètre.

Au lieu de prévoir un diviseur de fréquence commun pour tous les moteurs, il est possible de prévoir pour chaque moteur un diviseur de fréquence séparé.

Les données ci-dessus démontrent que le dispositif de sondage proposé, quoique très compact, est simple, très efficace et précis dans les mesures.

Il est possible de combiner le profilomètre proposé ci-dessus avec les sondes classiques de mesure thermique et de prise d'échantillons gazeux. Il suffit pour cela de modifier légèrement la conception et la structure du bras porteur 26 et d'y incorporer les thermocouples nécessaires et les tubes nécessaires aux prises d'échantillons de gaz, comme décrit dans le document EP-A2-0 056 943.

Il est également possible de prévoir à l'intérieur de chacun des poids 34 des transducteurs acoustiques reliés électriquement à travers les câbles à des détecteurs appropriés à l'extérieur pour mesurer, par exemple, les bruits à la surface du chargement ou l'impact des poids sur la matière afin de tirer des renseignements quant à la nature et la granulométrie des matériaux présents aux différents points de mesure. En outre, il est possible de combiner avec chacune des sondes des moyens de mesure de pression afin de connaître la répartition de la pression sur la section du four.

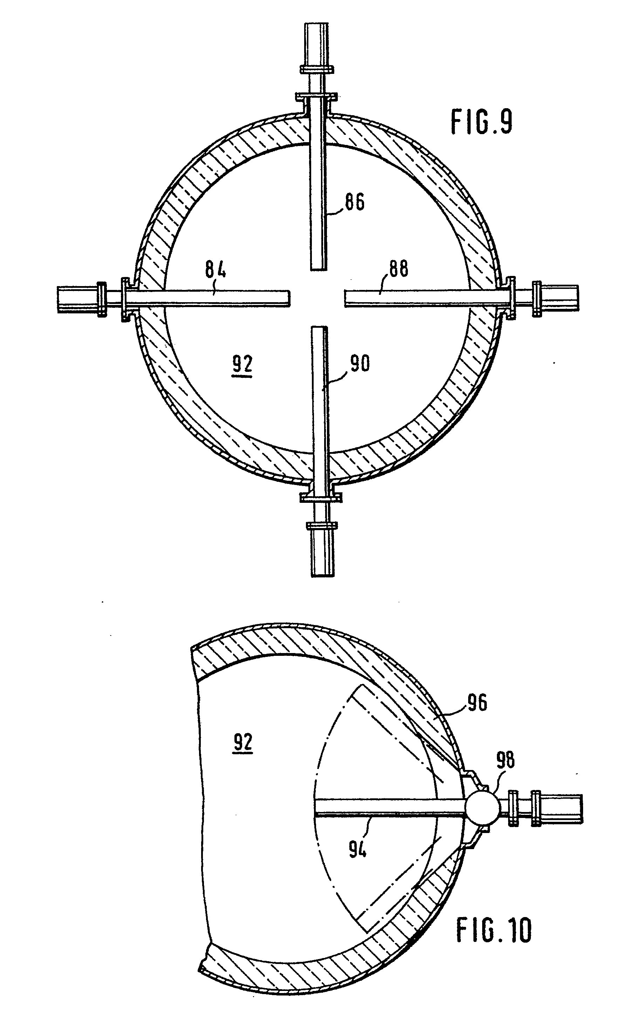

La figure 9 illustre schématiquement un arrangement avec quatre sondes 84, 86, 88 et 90 disposées diamétralement, en croix, au-dessus du lit de fusion d'un four à cuve 92. Ces sondes 84, 86, 88 et 90 peuvent être toutes des profilomètres tels que décrits ci-dessus, ou bien des profilomètres combinés avec des sondes thermiques avec prise d'échantillons gazeux, ou bien par exemple, deux profilomètres 84 et 88 et deux sondes thermiques et gazeuses 86 et 90.

Il est également possible de monter les dispositifs de sondage de façon pivotante sur la paroi 96 du four 92 comme montré sur la figure 10. Le bras porteur 94 est, dans ce cas, monté au moyen d'une articulation universelle 98, comme décrit dans la demande de brevet EP-A1-0 045 098, ce qui lui permet d'être pivotée horizontalement entre les deux positions extrêmes représentées en traits interrompus. Ceci permet à la sonde 94 d'être déplacée d'une position opérative de sondage représentée en traits pleins vers l'une ou l'autre des positions de "garage" représentées en traits mixtes afin de ne pas gêner le chargement du four et de ne pas être exposée à la chute de la matière. En plus, une telle sonde pivotante permet d'effectuer des mesures de profil, non seulement dans les positions extrêmes, mais également dans toute position angulaire intermédiaire. Autrement dit, on peut effectuer des sondages non seulement dans une position radiale, mais également dans toute autre direction. En prévoyant plusieurs sondes pivotantes, par exemple quatre comme montré sur la figure 9, on peut balayer quasiment toute la surface de chargement et obtenir une mosaïque de points de mesure fournissant une indication du profil de toute la surface supérieure.

La possibilité de pivotement du bras dans une position "garage" présente un avantage supplémentaire pour les dispositifs de chargement à cloches, dans la mesure où la présence du bras porteur dans la trajectoire de chute pourrait créer un "fossé" à la surface de chargement et fausser les résultats de sondage du niveau. Ce risque n'existe pas pour les dispositifs de chargement à goulotte où la trajectoire de chute est hélicoïdale et le fossé éventuel n'est pas juste en-dessous du bras porteur.

Au lieu de prévoir un pivotement horizontal du bras il est également possible de prévoir un pivotement vertical. Ceci est surtout avantageux lorsque le dispositif est combiné avec des mesures thermiques et gazeuses, car le bras peut alors, en vue de ces mesures, être disposé aussi parallèlement que possible par rapport à la surface de chargement.

Pour éviter une remontée des poussières à travers les tubes 48 jusqu'à l'unité de commande 28 il est préférable de prévoir à l'intérieur de celle-ci une surpression $\Delta p_1$ par rapport à la pression régnant à l'intérieur du four.

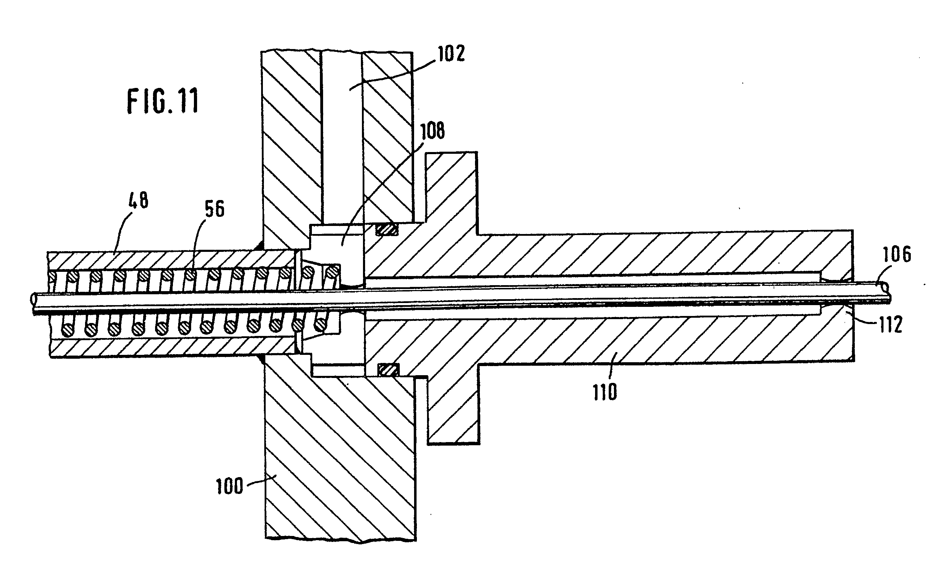

Toutefois, conformément à un mode de réalisation avantageux il est prévu en plus de la surpression dans l'unité 28 un rinçage individuel de chacun des tubes 48. A cet effet il est prévu, comme le montre la figure 11 au niveau de l'une des brides 100 de l'ouverture 32 une alimentation 102 en gaz de rinçage à une pression $p = p_f + \Delta p_1 + \Delta p_2$, $p_f$ étant la pression régnant dans le four, $\Delta p_1$, la supression dans l'unité de commande 28 et $\Delta p_2$ la supression du gaz de rinçage par rapport à la pression dans l'unité de commande 28. La surpression $\Delta p_1 + \Delta p_2$ par rapport à la pression dans le four assure la circulation des gaz de rinçage à travers les tubes 48 jusque dans le four. Pour permettre le rinçage des tubes 48 lorsque les sondes sont remontées, les cuvettes 54 (voir figure 5) sont pourvues de découpes latérales 104 pour l'échappement des gaz de rinçage.

Comme le montre la figure 11 l'admission du gaz de rinçage dans chacun des tubes 48 est effectuée à travers une rondelle 108 de blocage du fil à ressort 56 qui entoure chaque câble 106 et qui possède des fentes diamétrales pour le passage des gaz.

Etant donné que la pression du gaz de rinçage est non seulement supérieure à la pression régnant dans le four mais également supérieure à la pression dans l'unité de commande 28 il serait possible que le gaz de rinçage se dirige de préférence, vers celle-ci, d'autant plus que les tubes opposent également une certaine résistance au passage des gaz de rinçage. Pour forcer les gaz de rinçage à se diriger dans les tubes 48 on a monté sur la bride 100 du côté opposé aux tubes 48 autour de chacun des câbles un manchon cylindrique 110 destiné à créer une perte de charge artificielle. Cette perte de charge est créée par le fait que la section de l'alésage du manchon 110 est inférieure à la section intérieure du fil 56 et que l'alésage du manchon est délimité de part et d'autre par un étranglement d'un côté par la rondelle 108 et de l'autre par un rétrécissement 112 du manchon 110.

Il est possible d'adapter, par modification de leur longueur, la perte de charge de chacun des manchons 110 aux pertes de charges occasionnées par les longueurs différentes de chacun des tubes 48. Il est également possible de brancher chacun des tubes 48 sur des sources de gaz de rinçage séparées dont les surpressions $\Delta p_2$ sont adaptées aux longueurs différentes des tubes.

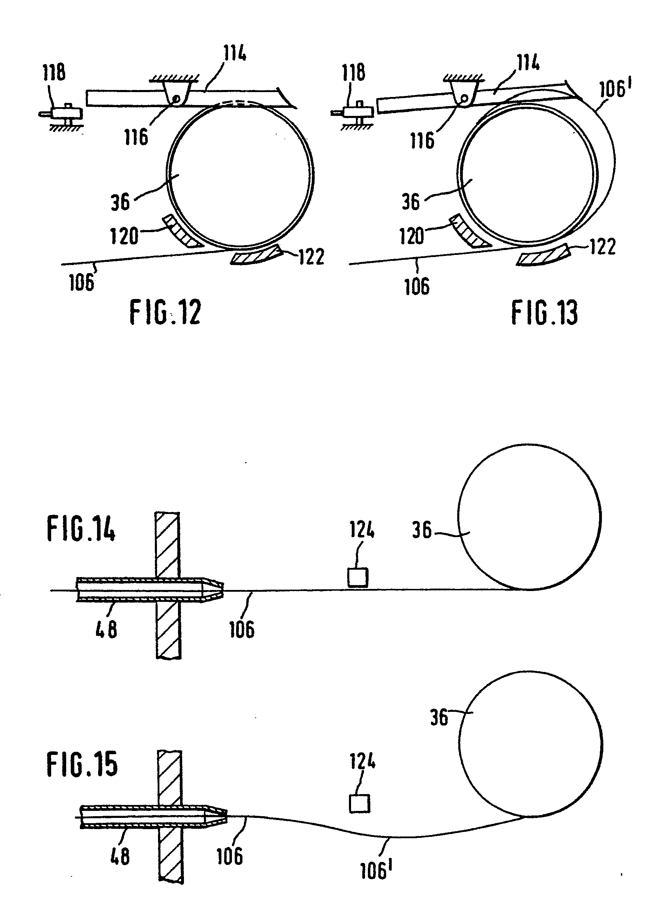

Pour éviter lors du déroulement des câbles 106, un enchevêtrement accidentel en cas de panne du détecteur de fin de course ou de coincement des câbles 106 dans les tubes 48 les figures 12 et 13 montrent un premier mode de réalisation d'un système de détection.

Ce système est essentiellement constitué de leviers basculants 114 suspendus au-dessus de chaque tambour 36 à un axe de pivotement 116 parallèle à l'axe du tambour. Ces levier 114 sont en fait des plaques dont la largeur correspond à celle des tambours 36, dont l'une des extrémités est normalement tangente à la face supérieure du tambour et dont l'extrémité opposée est associée à un interrupteur 118. En fonctionnement normal le système occupe la position de la figure 12. Par contre, lorsque le déroulement du câble 106 ne suit pas le mouvement engendré par le tambour 36 il se forme ce que l'on appelle un "mou de câble" 106' comme le montre la figure 13. Ce mou de câble 106' fait basculer le levier 114 qui actionne l'interrupteur 118 qui, à son tour commande immédiatement une inversion du sens de rotation du tambour 36 pour enrouler le câble 106 et faire remonter le poids.

Pour éviter que le mou de câble ne se produise n'importe où c'est-à-dire pour qu'il se produise dans la région 106' montrée par la figure 13, pour faire basculer le levier 114, on a prévu dans la région inférieure du tambour 36 deux plaques de guidage 120,122. Ces plaques servent, en outre, à forcer le câble 106 à se loger dans la canelure hélicoïdale 80 (voir figure 6) du tambour.

Le système à levier basculant peut être remplacé par un détecteur de proximité monté près de la surface du tambour dans la région où se produit le mou de câble 106' et qui détecte la levée du câble 106 du tambour 36 pour commander l'inversion du sens de rotation du tambour 36. Un tel détecteur peut être une cellule photoélectrique ou un détecteur électrique comme par exemple un détecteur à induction.

Les figures 14 et 15 montrent un deuxième mode de réalisation d'un système de détection d'un mou de câble. Ce système comporte un détecteur 124 disposé entre le tambour 36 et le tube 48 ou manchon 110 correspondant et qui s'étend sur la largeur de balayage du câble nécessaire à la couverture de la surface d'enroulement du tambour 36. Le détecteur 124 est hors service en cas de tension normale du câble comme montré à la figure 14. En cas de relâchement du câble, comme montré à la figure 15, le détecteur 124 commande immédiatement l'inversion du sens de rotation du tambour 36. Le détecteur 124 peut être un détecteur de proximité du genre décrit ci-dessus ou un détecteur à interrupteur électro-mécanique dont l'organe de commande est en contact avec le câble en fonctionnement normal comme représenté à la figure 14.

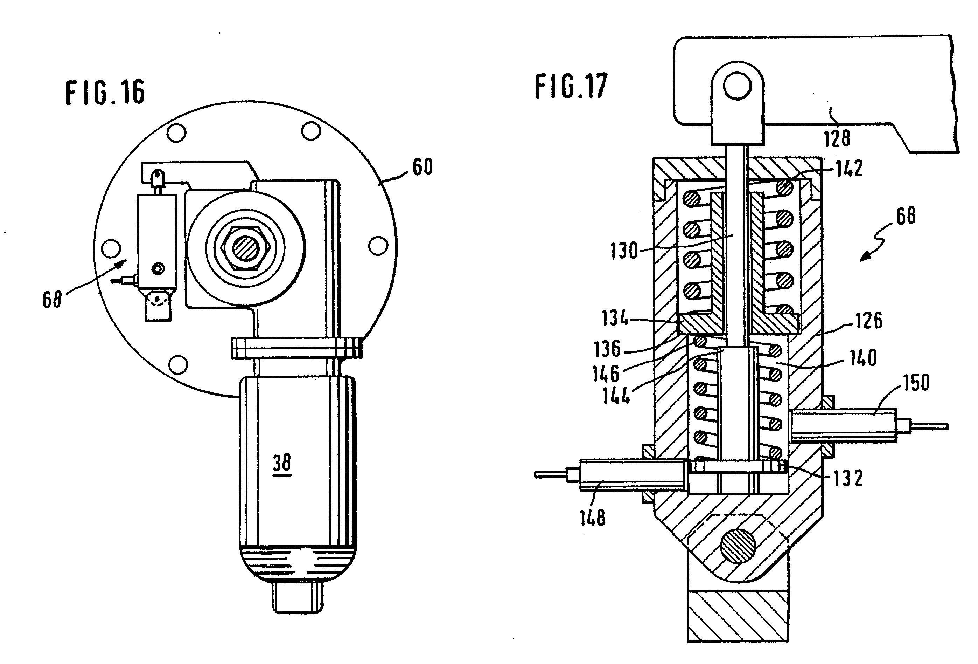

Les figures 16 et 17 illustrent une variante avantageuse d'un torsiomètre 68 destiné à détecter le moment où le couple atteint un seuil supérieur correspondant au blocage des sondes 34 dans les cuvettes 54 et le moment où le couple atteint un seuil inférieur correspondant au moment où la sonde touche la surface de chargement.

La figure 16 montre que le torsiomètre 68 est monté de la même manière que le transducteur piézoélectrique 70 de la figure 8. Comme montré sur cette figure le torsiomètre 68 comporte un boîtier cylindrique, creux monté entre le boîtier 60 d'un côté et, du côté opposé un levier 128 solidaire du bloc moteur 38. La liaison avec ce levier est réalisé par l'intermédiaire d'une tige de piston 130 et d'un premier piston 132 coulissant par rapport au boîtier 126 ou vice-versa.

Autour de la tige 130 et coaxialement par rapport à celle-ci se trouve un second piston 134. La paroi intérieure du boîtier 126 comporte un épaulement circulaire 136 définissant une chambre supérieure 138 et une chambre inférieure 140 à diamètre plus réduit que la chambre 138. Dans la chambre supérieure 138 se trouve un ressort de compression 142 dont l'action maintient le piston 134 normalement en appui sur l'épaulement 136.

La tige de piston 130 comporte également un épaulement circulaire 144 entre la partie supérieure de la tige 130 à section plus mince et la partie inférieure dans la chambre 140 à section plus large. Dans la chambre 140 se trouve un autre ressort de compression 146 tendu entre les deux pistons 132 et 144.

Deux détecteurs 148, 150 sont montés dans le boîtier 126 dans la partie inférieure de la chambre 140. Ces détecteurs sont activés par la présence et le coulissement du piston 132.

La force du ressort 146 est inférieure à la force résultant du poids de la sonde tandis que la force du ressort 142 est supérieure à la force résultant du poids de la sonde. Autrement dit, à l'état non sollicité les deux ressorts 142 et 146 maintiennent les pistons 132 et 134 dans les positions montrées sur la figure 17.

Par contre, lorsque le torsiomètre subit l'influence du poids de la sonde, comme c'est le cas lors du sondage c'est-à-dire lors de l'enroulement et du déroulement d'un câble et de la remontée et de la descente d'une sonde sur la surface de chargement, il subit une force supérieure à la force du premier ressort 146. Il en résulte que le piston 132 coulisse dans le boîtier 126 contre l'action du ressort 146 qui se comprime et jusqu'à ce que l'épaulement 144 prenne appui sur le piston 134. Un coulissement plus important par déplacement du piston 134 contre l'action du ressort 142 n'est pas possible car la force de ce dernier est supérieure à la force du poids de la sonde. Dans cette position le piston 132 se trouve exactement entre les deux détecteurs 148 et 150 de sorte qu'il n'est repéré par aucun de ceux-ci.

Lorsque lors de la descente, la sonde touche la surface de chargement l'action de son poids sur le torsiomètre diminue et la force du ressort 146 reprend le dessus pour pousser le piston dans la position illustrée sur la figure 17. Dans cette position le piston 132 est repéré par le détecteur 148 qui commande immédiatement l'arrêt du déroulement et l'enregistrement de la longueur du déroulement.

Le sondage terminé, la sonde est remontée de sorte que le piston vient se placer à nouveau en position neutre entre les deux détecteurs.

En fin de course lorsque les sondes sont arrêtés dans les cuvettes du bras porteur le torsiomètre 68 subit, outre l'action du poids des sondes, la contre-réaction du blocage des poids. Cette force est suffisante pour déplacer le piston 132 au-delà de la position neutre, par déplacement du piston 134 et compression du ressort 142 jusqu'à ce que la gaine du piston 134 bute contre le boîtier. Dans cette position le piston 132 est repéré par le détecteur 150 qui commande immédiatement l'arrêt de l'enroulement du câble.

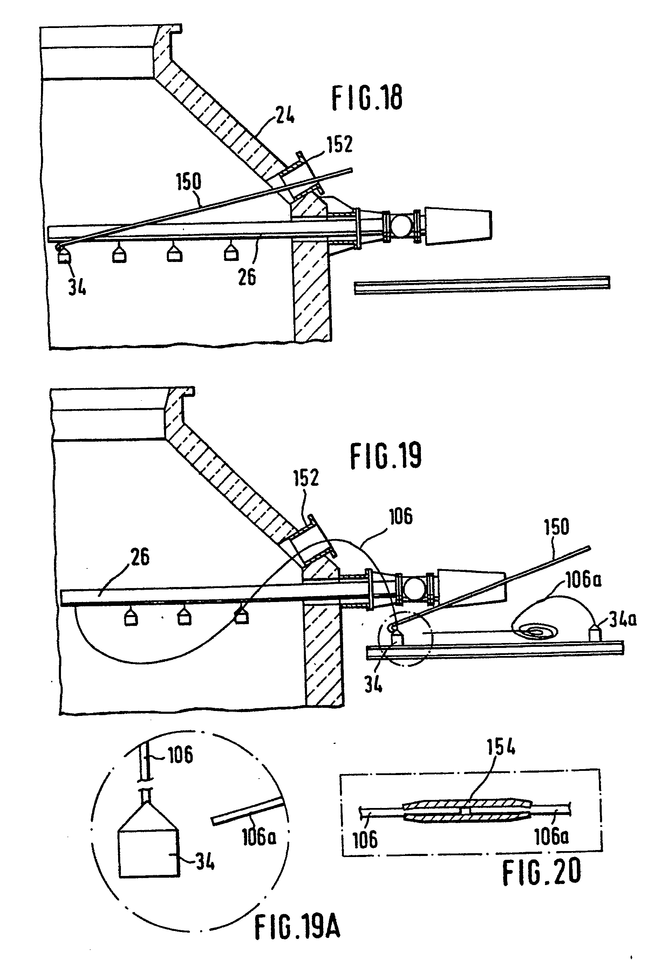

Les figures 18 à 20 illustrent un procédé avantageux de remplacement d'un câble défectueux et/ou de sa sonde. Comme le montre la figure 18 la sonde 34 du câble à changer est accrochée en position relevée à l'aide d'un crochet 150 introduit à travers une ouverture 152 dans la paroi de la tête du four. Ensuite la sonde est sortie à travers cette ouverture 152 par déroulement simultanée du câble 106 (voir figure 19). A l'extérieur du four le câble 106 est sectionné immédiatement au-dessus de la sonde 34 (voir figure 19A) et l'extrémité libre de l'ancien câble 106 est fixée à l'extrémité libre d'un nouveau câble 106a dont l'extrémité opposée porte une nouvelle sonde 34a. La fixation entre les deux câbles 106 et 106a peut être réalisée comme le montre la figure 20 au moyen d'une pièce de raccord 102 suffisamment plate pour pouvoir traverser un tube 48. Le raccord selon la figure 20 terminé, le câble 106 est, à nouveau, enroulé complètement sur son tambour en entraînant le nouveau câble 106a. Lorsque la pièce de raccord 154 apparaît au niveau du tambour, celui-ci est arrêté, le nouveau câble 106a est défait de sa fixation avec l'ancien câble 106, ce dernier est enlevé du tambour et l'opération se termine par la fixation du nouveau câble sur le tambour.

Il reste à noter que ce procédé avantageux ne nécessite aucun démontage au niveau de l'unité de commande ou du bras porteur.

## Revendications

1. Dispositif pour la détermination du profil de la surface de chargement d'un four à cuve (24) au moyen d'une série de sondes de niveau comprenant chacune un poids (34a-34h) suspendu verticalement au-dessus de la surface (22) de chargement à l'une des extrémités d'un câble sortant d'un bras porteur, les extrémités opposées de chacun de ces câbles étant reliées, chacune, à l'extérieur du four, dans une unité de commande (28), à l'un d'un nombre correspondant de tambours enrouleurs (36a-36h), chacun de ces tambours étant actionné par un dispositif d'entraînement (38) pour faire monter ou descendre la sonde reliée à ce tambour, un dispositif de contrôle pour mesurer le déroulement de chaque câble de son tambour et la descente de la sonde sur la surface, caractérisé en ce que le bras porteur (26) est constitué d'une gaine cylindrique (40) qui est fermée à l'exception d'une série d'ouvertures (42) associées à des cuvettes de réception (54) des poids à la face inférieure pour le passage des câbles, et qui renferme une série de tubes de guidage (48) reliant chacune desdites ouvertures (42) à l'unité de commande extérieure (28), une série d'entretoises (46) disposées transversalement dans la gaine (40) pour le maintien desdits tubes (48) et un ou plusieurs circuits de refroidissement s'étendant sur toute la longueur de la gaine (40) et autour de chacun des tubes de guidage (48), en ce que les tambours sont montés dans un boîtier (60) de ladite unité de commande, chaque tambour étant monté sur un arbre d'entraînement correspondant (62) qui traverse un palier (64) du boîtier de l'unité de commande et qui est actionné, à l'extérieur de celui-ci, par un moteur individuel (38) fixé sur le boîtier par l'intermédiaire d'un torsiomètre (68) pour mesurer le couple du moteur (38) par rapport au boîtier et détecter quand le poids touche la surface de chargement, en ce qu'il comporte des moyens comprenant des ailettes (72a, 72b) et ressorts (76a, 76b) montés dans chaque tambour et/ou des ressorts montés dans des cuvettes correspondantes pour amortir les chocs lors de la remontée des poids, et en ce qu'il est prévu une double alimentation électrique de chaque moteur (38), l'une à fréquence normale du réseau, l'autre à travers un diviseur de fréquence commun pour tous les moteurs (38), le branchement de chaque moteur (38) sur le diviseur de fréquence étant réalisé automatiquement en fin de course par un détecteur (66) de la position angulaire des tambours (36).

2. Dispositif selon la revendication 1, caractérisé en ce que les tubes de guidage sont torsadés à l'intérieur de la gaine (40), de façon à évoluer à l'approche des ouvertures (42) le long du côté de la gaine (40) qui est diamétralement opposée à celui des ouvertures (42) avant de pénétrer perpendiculairement dans celles-ci en formant un coude de 90 degrés.

3. Dispositif selon la revendication 2, caractérisé en ce que chacun des tubes (48) est garni intérieurement d'un fil (56) enroulé hélicoïdalement en ressort et traversé par le câble.

4. Dispositif selon la revendication 1, caractérisé en ce que chaque tube de guidage (48) est en communication avec un réservoir contenant un gaz de rinçage sous pression, cette pression étant supérieure à la pression dans l'unité de commande (28) qui, à son tour, est supérieure à la pression dans le four.

**5.** Dispositif selon la revendication 4, caractérisé en ce que chaque tube de guidage (48) est prolongé au delà de sa communication avec ledit réservoir en direction de l'unité de commande (28) par un manchon (1101 destiné à créer une perte de charge artificielle.

**6.** Dispositif selon la revendication 1, caractérisé en ce que chaque tambour (36) est associé à un système de détection de mou de câble.

**7.** Dispositif selon la revendication 6, caractérisé en ce que le système de détection comporte un levier basculant (114) associé à un interrupteur (118).

**8.** Dispositif selon la revendication 6, caractérisé en ce que le système de détection comporte un détecteur de proximité (124) disposé entre chaque tambour (36) et le tube de guidage correspondant (48), le détecteur de proximité (124) étant constitué par une cellule photoélectrique.

## Claims

**1.** Device for determining the profile of the charging surface of a shaft furnace (24) by means of a series of level probes each comprising a weight (34a - 34h) suspended vertically above the charging surface (22) on one of the ends of a cable projecting from a supporting arm, the opposite ends of each of these cables each being connected, outside the furnace, in a control unit (28), to one of a corresponding number of winding drums (36a-36h), each of these drums being actuated by a drive device (38) so as to raise or lower the probe connected to this drum, a monitoring device for measuring the unwinding of each cable from its drum and the descent of the probe onto the surface, characterised in that the supporting arm (26) consists of a cylindrical sleeve (40) which is closed with the exception of a series of orifices (42) associated with receiving cups (54) for the weights on the lower face of the passage of the cables and which contains a series of guide tubes (48) connecting each of the said orifices (42) to the external control unit (28), a series of struts (46) arranged transversely in the sleeve (40) for retaining the said tubes (48) and one or more cooling circuits extending over the entire length of the sleeve (40) and round each of the guide tubes (48), in that the drums are mounted in a housing (60) of the said control unit, each drum being mounted on a corresponding drive shaft (62) which passes through a bearing (64) of the housing of the control unit and which is actuated, outside the latter, by an individual motor (38) fixed to the housing via a torquemeter (68) for measuring the torque of the motor (38) relative to the housing and detecting when the weight touches the charging surface, in that it possesses means comprising blades (72a, 72b) and springs (76a, 76b) mounted in each drum and/or springs mounted in corresponding cups for damping the shocks during the ascent of the weights, and in that there is provided a double electrical supply to each motor (38), one at the normal frequency of the mains and the other via a frequency divider, common to all the motors (38), each motor (38) being connected to the frequency divider automatically at the end of travel by means of a detector (66) detecting the angular position of the drums (36).

**2.** Device according to Claim 1, characterised in that guide tubes are twisted within the sleeve (40), so as to change direction, in the vicinity of the orifices (42) along the side of the sleeve (40) which is diametrically opposite that of the orifices (42), before penetrating perpendicularly into the latter, forming a bend of 90 degrees.

**3.** Device according to Claim 2, characterised in that each of the tubes (48) is equipped on the inside with a wire (56) which is coiled helically in the form of a spring and through which the cable passes.

**4.** Device according to Claim 1, characterised in that each guide tube (48) communicates with a tank containing a scavenging gas under pressure, this pressure being higher than the pressure in the control unit (28) which in turn is higher than the pressure in the furnace.

**5.** Device according to Claim 4, characterised in that each guide tube (48) is extended, beyond its communication with the said tank, in the direction of the control unit (28) by means of a bush (110) intended to create an artificial load loss.

**6.** Device according to Claim 1, characterised in that each drum (36) is associated with a cable-slack detection system.

**7.** Device according to Claim 6, characterised in that the detection system comprises a rocker lever (114) associated with a circuit breaker (118).

8. Device according to Claim 6, characterised in that the detection system comprises a proximity detector (124) located between each drum (36) and the corresponding guide tube (48), the proximity detector (124) consisting of a photoelectric cell.

**Ansprüche**

1. Vorrichtung zur Bestimmung des Profils der Oberfläche der Beschickung eines Schachtofens (24) mittels einer Reihe von Füllstandfühlern wovon jeder Fühler einerseits ein Gewicht (34a - 34h) begreift, welches vertikal über der Oberfläche (22) der Beschickung an einem Ende eines aus einem Trägerarm heraushängenden Seiles aufgehängt ist, wobei die entgegengesetzten Enden eines jeden dieser Seile, ausserhalb des Ofens im Innern einer Steuereinheit (28), mit einer entsprechenden von mehreren Aufwickeltrommeln (36a - 36h) verbunden sind und wobei eine jede dieser Trommeln durch eine Antriebsvorrichtung (38) betätigt wird, um den an der jeweiligen Trommel befestigten Fühler zu heben oder zu senken und wobei jeder Fühler andrerseits eine Kontrollvorrichtung zur Messung des Abwickelns des Seiles von seiner Trommel sowie des Absinkens des Fühlers auf die Beschickungsoberfläche umfasst, dadurch gekennzeichnet, dass der Trägerarm (26) aus einer zylindrischen Hülle (40) besteht, wobei die Hülle geschlossen ist bis auf eine Reihe von zum Durchlassen der Seile bestimmten Öffnungen (42), die an der unteren Seite mit Aufnahmetellern (54) für die Gewichte versehen sind und wobei die Hülle in ihrem Innern sowohl eine Reihe von Führungsrohren (48) aufweist, wovon ein jedes eine der genannten Öffnungen (42) mit der aussenliegenden Steuereinheit (28) verbindet, als auch eine Reihe von quer in der Hülle (40) angeordneten und zur Halterung der genannten Rohre (48) bestimmten Abstandhaltern (46), sowie ein oder mehrere Kühlkreise die sich über die ganze Länge der Hülle (40) erstrecken und die ein jedes der Führungsrohre (48) umschliessen, und dass die Trommeln in einem Gehäuse (60) der besagten Steuereinheit (28) eingebaut sind, wobei jede Trommel auf einer entsprechenden Antriebswelle (62) sitzt, welche ein Lager (64) des Gehäuses (60) der Steuereinheit (28) durchsetzt und welche von ausserhalb des Gehäuses (60) her durch einen individuellen Motor (38) betätigt wird, welcher Motor (38) unter Zwischenschaltung eines Drehmomentmessers (68) auf dem Gehäuse (60) angebracht ist, sodass das Drehmoment des Motors (38) in Bezug auf das Gehäuse (60) gemessen wird und festgestellt wird wann ein Gewicht (34) die Oberfläche (22) der Beschickung berührt, und dass die Welle (62) in jeder Trommel (36)) mit Flügeln (72a, 72b) und mit Federn (76a, 76h) ausgestattete Mittel begreift und/oder die Federn (76a, 76h) in entsprechenden Schalen untergebracht sind, um die Schläge beim Hochfahren der Gewichte zu dämpfen, und dass eine doppelte elektrische Versorgung eines jeden Motors (38) vorgesehen ist, eine bei der normalen Frequenz des Netzes und eine über einen allen Motoren (38) gemeinsamen Frequenzteiler, wobei die Schaltung eines jeden Motors (38) auf den Frequenzteiler automatisch in der Endstellung durch den die Winkelstellung der Trommeln (36) ermittelnden Detektor (66) bewerkstelligt wird.

2. Vorrichtung gemäss dem Anspruch 1, dadurch gekennzeichnet, dass die Führungsrohre (48) im Innern der Hülle (40) verdrillt sind, so dass sie beim Herannahen an die Öffnungen (42) entlang der Seite der Hülle (40) verlaufen die den Öffnungen (42) quer gegenüber liegt und dass sie unter Bildung eines Krümmers von 90 Grad senkrecht in die Öffnungen (42) einmünden.

3. Vorrichtung gemäss dem Anspruch 1, dadurch gekennzeichnet, dass ein jedes der Führungsrohre (48) im Innern mit einem schraubenförmig als Feder aufgewickelten Draht (56) ausgelegt ist durch welchen das Seil hindurchgeht.

4. Vorrichtung gemäss dem Anspruch 1, dadurch gekennzeichnet, dass ein jedes der Führungsrohre (48) mit einem Behälter in Verbindung steht der ein unter Druck stehendes Reinigungsgas enthält, wobei dieser Druck höher ist als der Druck in der Steuereinheit (28) welcher seinerseits höher ist als der Druck in dem Ofen.

5. Vorrichtung gemäss dem Anspruch 4, dadurch gekennzeichnet, dass ein jedes der Führungsrohre (48) über seine Verbindungsstelle mit dem besagten Behälter hinaus, in Richtung auf die Steuereinheit (28) hin, verlängert ist durch einen Stutzen (110) der dazu bestimmt ist einen künstlichen Druckabfall zu verursachen.

6. Vorrichtung gemäss dem Anspruch 1, dadurch gekennzeichnet, dass jede Trommel (36) mit einem zum Erfassen der Schlaffheit der Seile bestimmten System in Verbindung steht.

7. Vorrichtung gemäss dem Anspruch 6, dadurch gekennzeichnet, dass das der Erfassung der Schlaffheit der Seile dienende System einen mit einem Ausschalter (118) verbundenen Kipphebel (114) begreift.

8. Vorrichtung gemäss dem Anspruch 6, dadurch gekennzeichnet, dass das der Erfassung der Schlaffheit der Seile dienende System einen Näherungssensor (124) begreift, der zwischen jeder Trommel (36) und dem entsprechenden Führungsrohr (48) angeordnet ist, wobei der Näherungsdetektor (124) von einer photoelektrischen Zelle gebildet wird.

FIG.1

FIG.2

EP 0 141 115 B1

FIG.3

FIG.4

FIG.5

FIG.7

FIG.6

FIG.8

EP 0 141 115 B1

FIG.9

86

84

88

92

90

FIG.10

92

96

98

94

FIG.11

FIG.12

FIG.13

FIG.14

FIG.15

FIG.16

FIG.17

EP 0 141 115 B1

FIG.18

FIG.19

FIG.19A

FIG.20